# EUROPEAN PATENT SPECIFICATION

(11) **EP 4 256 927 B1**
(45) Date of publication and mention of the grant of the patent: **28.01.2026**
(21) Application number: 21900525.3
(22) Date of filing: 29.11.2021
(51) Int. Cl.: A01B 69/00, G05D 1/224, G05D 1/622, G05D 1/648, G05D 105/15, G05D 107/20, G05D 109/10, A01B 69/04

(54) **AUTOMATIC TRAVELING SYSTEM, AUTOMATIC TRAVELING METHOD, AND AUTOMATIC TRAVELING PROGRAM**
AUTOMATISCHES FAHRSYSTEM, AUTOMATISCHES FAHRVERFAHREN UND AUTOMATISCHES FAHRPROGRAMM
SYSTÈME, PROCÉDÉ ET PROGRAMME DE DÉPLACEMENT AUTOMATIQUE

(30) Priority: 02.12.2020 JP 2020200357
(43) Date of publication of application: 11.10.2023
(73) Proprietor: Yanmar Holdings Co., Ltd., Osaka-shi, Osaka, 530-0013 (JP)
(72) Inventor: IWASE Takuya, Osaka-shi, Osaka 530-0014 (JP); MURAYAMA Masaaki, Osaka-shi, Osaka 530-0014 (JP)
(74) Representative: Sekiguchi, Kazuya
(86) International application number: PCT/JP2021/043531
(87) International publication number: WO 2022/118772

(56) References cited:
- JP-A- 2017 221 222
- JP-A- 2019 097 454
- JP-A- 2019 175 254
- JP-A- 2020 129 995
- JP-A- 2020 171 318
- JP-A- 2020 171 318
- US-A1- 2016 340 867
- US-A1- 2017 118 915
- US-A1- 2017 135 277

## Description

### TECHNICAL FIELD

The present invention relates to an automatic traveling system, an automatic traveling method, and an automatic traveling program for causing a work vehicle to perform automatic traveling.

### BACKGROUND ART

A work vehicle is equipped with an obstacle sensor such as an infrared sensor and an ultrasonic sensor, and detects an obstacle in a detection area during automatic traveling. The detection area is, for example, set in a fan shape within a predetermined distance (e.g., 10 m) in the forward direction from an obstacle sensor in plan view. For example, when an obstacle enters the detection area during automatic traveling of a work vehicle, a conventional system notifies an operator and also performs collision avoidance control for causing the work vehicle to stop (see Patent Literature 1, for example).

### CITATION LIST

### Patent Literature

Patent Literature 1 : International Publication No. 2015/147149

### DISCLOSURE OF INVENTION

### PROBLEMS TO BE SOLVED BY THE INVENTION

An obstacle sensor can be added as an option and can be installed on all sides of the work vehicle so as to eliminate a blind spot. However, the blind spot may occur depending on the content of the work. For example, when a work machine is used in a state in which the work machine is offset from the work vehicle to one side of the right and left as in mowing work, a blind spot occurs in the offset direction. In order to eliminate the blind spot in the offset direction, the obstacle sensor needs to be installed in the work machine. Thus, when obstacle sensors are installed in order to cope with all tasks, the number of obstacle sensors increases and costs rises. On the other hand, when the number of obstacle sensors is reduced, safety is reduced because blind spots increase.

An object of the present invention is to provide an automatic traveling system, an automatic traveling method, and an automatic traveling program capable of preventing increase in cost while ensuring safety of a work vehicle.

### MEANS FOR SOLVING THE PROBLEMS

An automatic traveling system according to the present invention includes a route acquisition processing unit and a report processing unit that performs reporting. The route acquisition processing unit acquires a travel route for a work vehicle. The report processing unit reports an inquiry as to whether or not to start automatic traveling of the work vehicle in a case where the travel route acquired by the route acquisition processing unit includes a first travel route that goes in a direction different from a direction of a detection area of a detection unit that is installed in the work vehicle and detects an obstacle around the work vehicle.

An automatic traveling method according to the present invention is an automatic traveling method comprising executing, by one or more processors, acquisition of a travel route for a work vehicle, and reporting of an inquiry as to whether or not to start automatic traveling of the work vehicle in a case where the travel route includes a first travel route that goes in a direction different from a direction of a detection area of a detection unit that is installed in the work vehicle and detects an obstacle around the work vehicle.

An automatic traveling program according to the present invention is a program for causing one or more processor to execute acquisition of a travel route for a work vehicle and reporting of an inquiry as to whether or not to start automatic traveling of the work vehicle in a case where the travel route includes a first travel route that goes in a direction different from a direction of a detection area of a detection unit that is installed in the work vehicle and detects an obstacle around the work vehicle.

### EFFECT OF THE INVENTION

According to the present invention, it is possible to prevent an automatic traveling system, an automatic traveling method, and an automatic traveling program capable of preventing increase in cost while ensuring safety of a work vehicle.

### BRIEF DESCRIPTION OF DRAWINGS

FIG. 1 is a block diagram illustrating a configuration of an automatic traveling system according to an embodiment of the present invention.
FIG. 2 is an external view illustrating an example of a work vehicle according to the embodiment of the present invention.
FIG. 3 is a diagram illustrating an example of a travel route of the work vehicle according to the embodiment of the present invention.
FIG. 4A is a diagram illustrating a position of an obstacle sensor installed in the work vehicle according to the embodiment of the present invention.
FIG. 4B is a diagram illustrating a position of a camera installed in the work vehicle according to the embodiment of the present invention.
FIG. 5 is a diagram illustrating an example of a work vehicle information used in the automatic traveling system according to the embodiment of the present invention.
FIG. 6 is a diagram illustrating an example of travel route information used in the automatic traveling system according to the embodiment of the present invention.
FIG. 7 is a diagram illustrating an example of travel feasibility information used in the automatic traveling system according to the embodiment of the present invention.
FIG. 8A is a diagram illustrating an example of a route selection screen displayed on an operation terminal according to the embodiment of the present invention.
FIG. 8B is a diagram illustrating an example of the route selection screen displayed on the operation terminal according to the embodiment of the present invention.
FIG. 9A is a diagram illustrating an example of a selection screen displayed on the operation terminal according to the embodiment of the present invention.
FIG. 9B is a diagram illustrating an example of the selection screen displayed on the operation terminal according to the embodiment of the present invention.
FIG. 10A is a diagram illustrating an example of a travel status screen displayed on the operation terminal according to the embodiment of the present invention.
FIG. 10B is a diagram illustrating an example of the travel status screen displayed on the operation terminal according to the embodiment of the present invention.
FIG. 10C is a diagram illustrating an example of the travel status screen displayed on the operation terminal according to the embodiment of the present invention.
FIG. 11 is a flowchart illustrating an example of a procedure of an automatic traveling process executed by the automatic traveling system according to the embodiment of the present invention.

### DESCRIPTION OF EMBODIMENTS

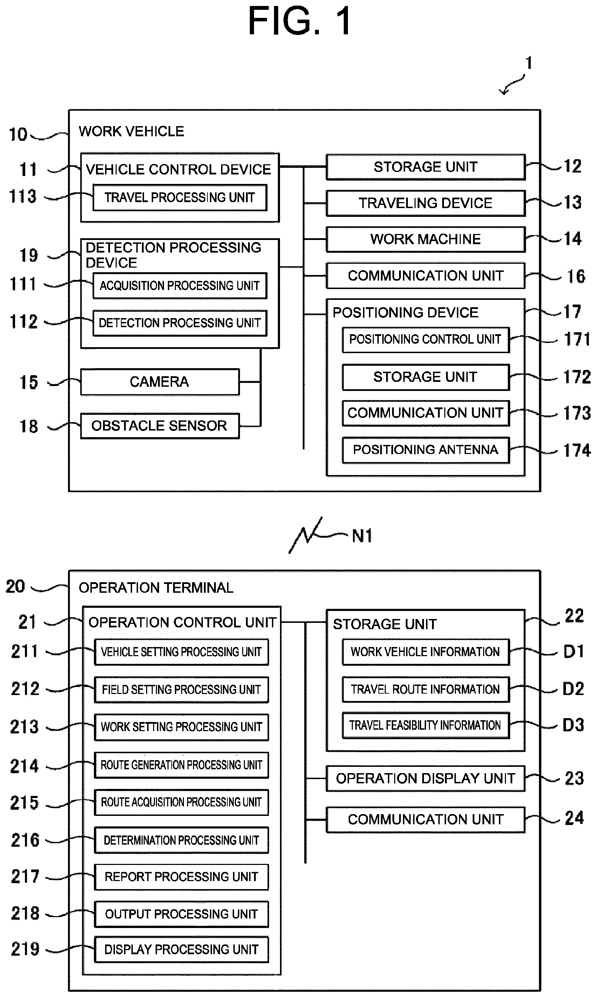

As illustrated in FIG. 1, an automatic traveling system 1 according to the embodiment of the present invention includes a work vehicle 10 and an operation terminal 20. The work vehicle 10 and the operation terminal 20 can communicate with each other via a communication network N1. For example, the work vehicle 10 and the operation terminal 20 can communicate with each other via a portable telephone line network, a packet line network, or a wireless LAN.

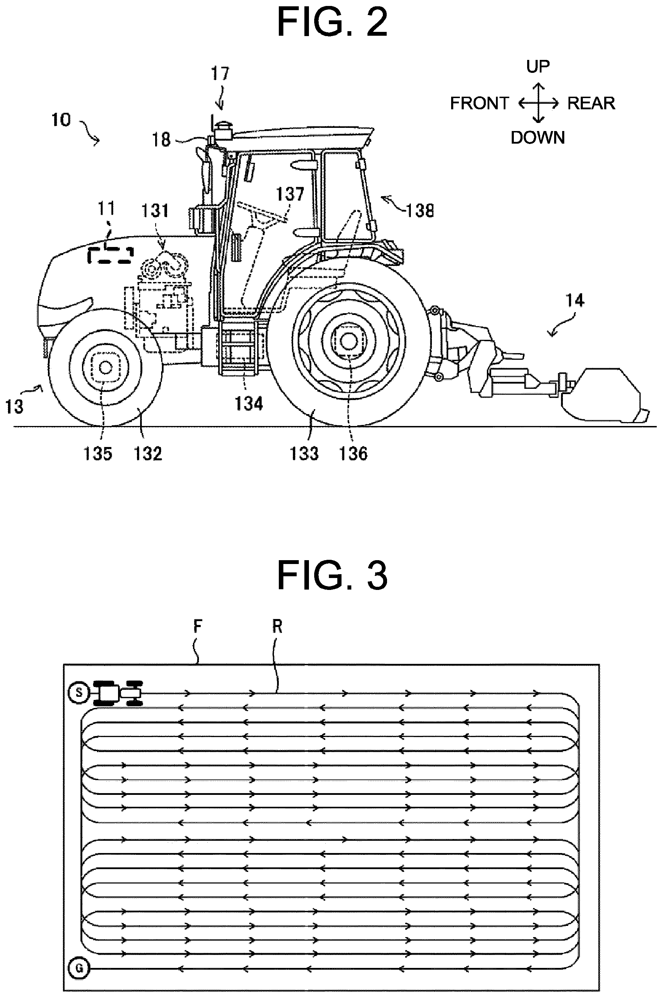

In this embodiment, an example, in which the work vehicle 10 is a tractor, will be described. As another embodiment, the work vehicle 10 may be a rice transplanter, a combine, a construction machine, a snowplow, or the like. The work vehicle 10 is a so-called robot tractor having a configuration that enables automatic traveling (autonomous traveling) in a field F (see FIG. 3) along a preset travel route R. For example, the work vehicle 10 can automatically travel along the travel route R that is generated for the field F in advance on the basis of positional information on a current position of the work vehicle 10, which is calculated by a positioning device 17.

For example, the work vehicle 10 travels back and forth in parallel from a work start position S to a work end position G in a work area in the field F illustrated in FIG. 3. The outer peripheral side of the field F is, for example, a headland area where the work vehicle 10 turns. The travel route R is not limited to the route illustrated in FIG. 3, but can be set as appropriate in accordance with a work content.

### [Work Vehicle 10]

As illustrated in FIG. 1 and FIG. 2, the work vehicle 10 includes a vehicle control device 11, a storage unit 12, a traveling device 13, a work machine 14, a camera 15, a communication unit 16, the positioning device 17, an obstacle sensor 18, and a detection processing device 19. The vehicle control device 11 is electrically connected to the storage unit 12, the traveling device 13, the work machine 14, the positioning device 17, and the like. The vehicle control device 11 and the positioning device 17 may be communicable wirelessly. The camera 15 and the obstacle sensor 18 are electrically connected to the detection processing device 19.

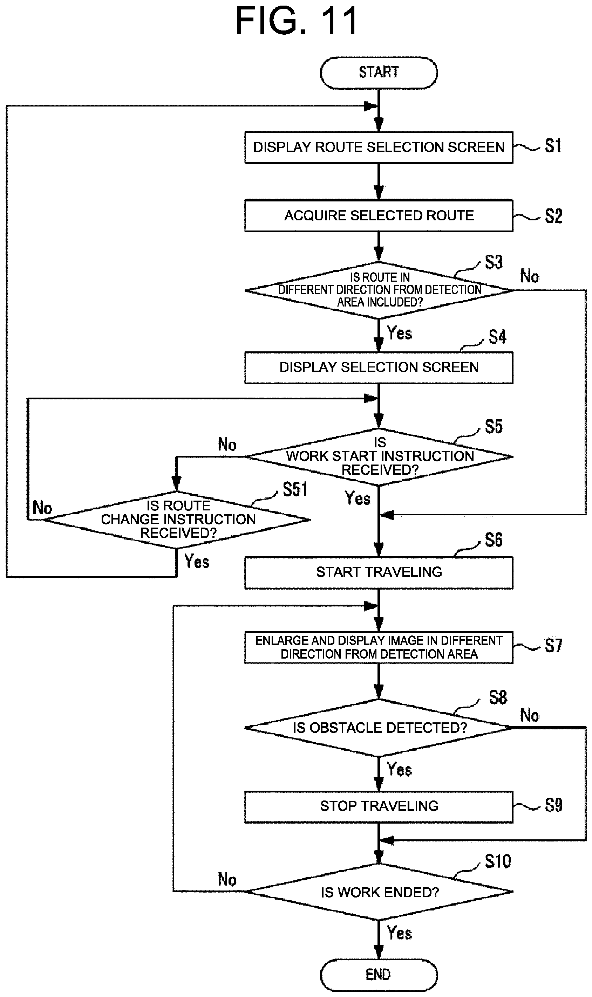

The storage unit 12 is a non-volatile storage unit such as a hard disk drive (HDD) and a solid state drive (SSD) that store various types of information. The storage unit 12 stores a control program such as an automatic traveling program for causing the vehicle control device 11 to execute an automatic traveling process described below (see FIG. 11). For example, the automatic traveling program is non-temporarily recorded in a computer-readable recording medium such as a CD and a DVD, and is read by a predetermined reading device (not illustrated) to be stored in the storage unit 12. The automatic traveling program may be downloaded from a server (not illustrated) to the work vehicle 10 via the communication network N1 to be stored in the storage unit 12. In addition, the storage unit 12 stores data of the travel route R and the like generated in the operation terminal 20.

The traveling device 13 is a driving unit that causes the work vehicle 10 to travel. As illustrated in FIG. 2, the traveling device 13 includes an engine 131, front wheels 132, rear wheels 133, a transmission 134, a front axle 135, a rear axle 136, a steering wheel 137, and the like. The front wheels 132 and the rear wheels 133 are provided on both the left and right sides of the work vehicle 10. Further, the traveling device 13 is not limited to a wheel type having the front wheels 132 and the rear wheels 133 and may be a crawler type having crawlers provided on the left and right sides of the work vehicle 10.

The engine 131 is a driving source such as a diesel engine and a gasoline engine that are driven using fuel supplied in a fuel tank (not illustrated). The traveling device 13 may include an electric motor as a driving source together with or instead of the engine 131. A generator (not illustrated) is connected to the engine 131, and electric power is supplied from the generator to an electric component such as the vehicle control device 11, a battery, and the like that are provided in the work vehicle 10. The battery is charged by the electric power supplied from the generator. The electric components such as the vehicle control device 11 and the positioning device 17 provided in the work vehicle 10 can be driven by the electric power supplied from the battery after the engine 131 stops.

Driving force of the engine 131 is transmitted to the front wheels 132 via the transmission 134 and the front axle 135 and is transmitted to the rear wheels 133 via the transmission 134 and the rear axle 136. Further, the driving force of the engine 131 is also transmitted to the work machine 14 via a PTO shaft (not illustrated). When the work vehicle 10 performs automatic traveling, the traveling device 13 performs traveling movement according to a command from the vehicle control device 11.

Examples of the work machine 14 include a mower, a cultivator, a plow, a fertilizer, and a sowing machine, and the work machine 14 is detachable to/from the work vehicle 10. Consequently, the work vehicle 10 can perform various types of works by using the respective work machines 14. In this embodiment, an example, in which the work machine 14 is a mower, will be described.

For example, the work machine 14 is mounted so as to offset to one of the left and right sides of the work vehicle 10. For example, the work vehicle 10 is mounted with a directly mounted type work machine 14 offset to one of the left and right sides, and performs mowing and other work by traveling in a field. The work machine 14 is not limited to the directly mounted type work machine (see FIG. 2) that is fixed to the work vehicle 10, and may be a towed type work machine that is towed by the work vehicle 10.

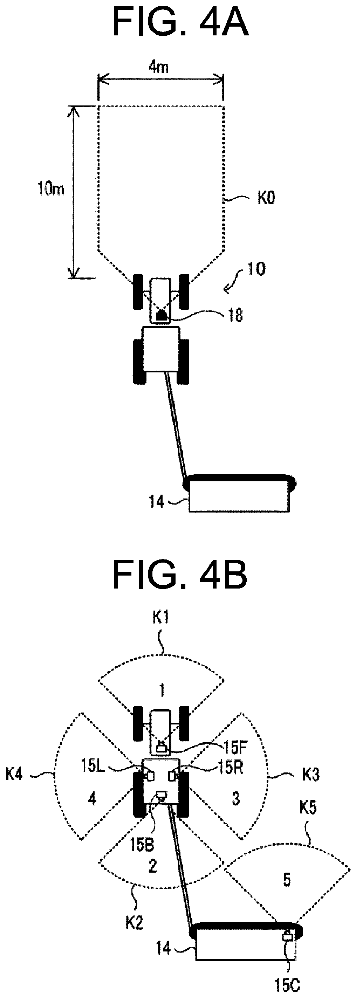

The obstacle sensor 18 is a sensor that detects an obstacle in a predetermined detection area K0 by using infrared, ultrasonic, or other means. For example, the obstacle sensor 18 may be a rider sensor (distance sensor) that can three-dimensionally measure a distance to an object (obstacle) to be measured using a laser or may be a sonar sensor with a plurality of sonars that can measure a distance to an object to be measured using ultrasonic waves. The obstacle sensor 18 is installed at a front part of a body of the work vehicle 10 (see FIG. 2 and FIG. 4A) and detects an obstacle in front of the work vehicle 10.

The obstacle sensor 18 is configured to be able to detect an obstacle in the preset predetermined detection area K0. For example, as illustrated in FIG. 4A, the obstacle sensor 18 is configured to be able to detect an obstacle in the detection area K0, which is about 10 m in front of the work vehicle 10 and about 4 m wide. The obstacle sensor 18 detects an object, a person, or the like that enters the detection area K0. The obstacle sensor 18 transmits measurement information to the detection processing device 19.

For example, the obstacle sensor 18 is installed only at the front part of the work vehicle 10. Consequently, the cost of the work vehicle 10 can be reduced compared to a case where a plurality of obstacle sensors 18 are installed. The obstacle sensor 18 can be installed at a location other than the front part of the work vehicle 10. For example, the obstacle sensor 18 can be installed on a rear part, a right side part, a left side part, the work machine 14, or the like of the work vehicle 10. A user (operator) can also install additional an obstacle sensor 18 depending on the content of the work. An operator who owns a plurality of work vehicles 10 may also install the obstacle sensors 18 at different positions for each of the work vehicles 10, depending on the content of the work. The obstacle sensor 18 is an example of a detection unit.

The obstacle sensor 18 is electrically connected to the work vehicle 10, so that the detection processing device 19 can communicate with the obstacle sensor 18. When the detection processing device 19 become able to communicate with the obstacle sensor 18, the detection processing device 19 can acquire the number of the obstacle sensors 18, and identification information (device information) of each obstacle sensor 18.

The camera 15 is a digital camera that captures an image of an object and outputs the image as digital image data. The camera 15 continuously images the object at a predetermined frame rate, generates frame images with predetermined resolution, and sequentially transmits the frame images to the detection processing device 19. The camera 15 is an example of a monitoring unit and an imaging unit. The monitoring unit of the present invention is not limited to the camera 15, but may be a sensor with a different function from the obstacle sensor 18 (e.g., a sensor with lower detection accuracy than the obstacle sensor 18).

In this embodiment, five cameras 15 are installed in different locations in the work vehicle 10. Specifically, as illustrated in FIG. 4B, a camera 15F (hereinafter also referred to as a "camera 1") is installed at the front part of the work vehicle 10, a camera 15B (hereinafter also referred to as a "camera 2") is installed at the rear part of the work vehicle 10, and a camera 15R (hereinafter also referred to as a "camera 3") is installed at the right side part of the work vehicle 10, a camera 15L (hereinafter also referred to as a "camera 4") is installed on the left side part of the work vehicle 10, and a camera 15C (hereinafter also referred to as a "camera 5") is installed on the right front part of the work machine 14. The camera 15 may be installed on the work vehicle 10 by using, for example, a double-sided tape.

Each of the cameras 15 has a predetermined imaging range (detection area) within which an image can be imaged. For example, the camera 15F images an imaging area K1 in front of the work vehicle 10, the camera 15B images an imaging area K2 behind the work vehicle 10, the camera 15R images an imaging area K3 on the right side of the work vehicle 10, the camera 15L captures an imaging area K4 on the left side of the work vehicle 10, and the camera 15C images an imaging area K5 on the right side in front of the work machine 14. Each of the cameras 15 captures images of the imaging area at a predetermined frame rate and sequentially transmits the captured images to the detection processing device 19. The detection processing device 19 transmits the above captured images and a detection result (determination result) described below to the vehicle control device 11 and the operation terminal 20.

The camera 15 is electrically connected to the work vehicle 10, so that the detection processing device 19 becomes communicable with the camera 15. When the detection processing device 19 becomes communicable with the camera 15, the detection processing device 19 acquires the number of the cameras 15, and the identification information (device information) of each camera 15. The detection processing device 19 outputs the acquired information on the number and identification information of the cameras 15 to the vehicle control device 11, and the vehicle control device 11 outputs the above information on the number and identification to the operation terminal 20. The operator can add an additional camera 15 or change the location of installation.

The steering wheel 137 is an operation unit operated by an operator or the vehicle control device 11. For example, in the traveling device 13, the angle of the front wheels 132 is changed by a hydraulic power steering mechanism (not illustrated) or the like in accordance with the operation of the steering wheel 137 by the vehicle control device 11, so that the traveling direction of the work vehicle 10 changes.

Further, the traveling device 13 includes a shift lever, an accelerator, a brake, and the like (not illustrated) operated by the vehicle control device 11, in addition to the steering wheel 137. In the traveling device 13, a gear of the transmission 134 is switched to a forward gear, a reverse gear, or the like in accordance with the operation of the shift lever by the vehicle control device 11, and a traveling mode of the work vehicle 10 is switched to a forward mode, a reverse mode, or the like. The vehicle control device 11 controls the rotation speed of the engine 131 by operating the accelerator. Further, the vehicle control device 11 operates the brakes to stop the rotation of the front wheels 132 and the rear wheels 133 using an electromagnetic brake.

The positioning device 17 is a communication device including a positioning control unit 171, a storage unit 172, a communication unit 173, a positioning antenna 174, and the like. For example, as illustrated in FIG. 2, the positioning device 17 is provided at an upper part of a cabin 138 in which an operator rides. Further, an installation location of the positioning device 17 is not limited to the cabin 138. Moreover, the positioning control unit 171, the storage unit 172, the communication unit 173, and the positioning antenna 174 of the positioning device 17 may be separately disposed at different positions in the work vehicle 10. As described above, the battery is connected to the positioning device 17, so that the positioning device 17 can operate when the engine 131 is stopped. Further, as the positioning device 17, for example, a mobile phone terminal, a smart phone, a tablet terminal, or the like may be used an alternative.

The positioning control unit 171 is a computer system that includes one or more processors and storage memories such as a non-volatile memory and a RAM. The storage unit 172 is a non-volatile memory or the like that stores a program for causing the positioning control unit 171 to execute a positioning process, and data such as positioning information and movement information. For example, the program is non-temporarily recorded in a computer-readable recording medium such as a CD and a DVD, read by a predetermined reading device (not illustrated), and stored in the storage unit 172. The program may be downloaded from a server (not illustrated) to the positioning device 17 via the communication network N1 and stored in the storage unit 172.

The communication unit 173 is a communication interface that connects the positioning device 17 to the communication network N1 by wire or wirelessly and executes data communication according to a predetermined communication protocol with an external device such as a base station server via the communication network N1.

The positioning antenna 174 is an antenna that receives a radio wave (GNSS signal) transmitted from a satellite.

The positioning control unit 171 calculates a current position of the work vehicle 10 on the basis of the GNSS signal that is received by the positioning antenna 174 from the satellite. For example, in the case where the work vehicle 10 travels automatically in the field F, when the positioning antenna 174 receives radio waves (emission time, locus information, and the like) emitted from each of a plurality of satellites, the positioning control unit 171 calculates a distance between the positioning antenna 174 and each of the satellites and calculates a current position (a latitude and a longitude) of the work vehicle 10 on the basis of the calculated distance. Alternatively, the positioning control unit 171 may perform positioning by a real-time kinematic positioning method (an RTK-GPS positioning method (an RTK method)) for calculating a current position of the work vehicle 10 by using correction information that corresponds to a base station (reference station) near the work vehicle 10. Thus, the work vehicle 10 automatically travels using the positioning information by the RTK method.

The vehicle control device 11 and the detection processing device 19 are control devices such as CPUs, ROMs, and RAMs. The CPU is a processor that executes various arithmetic processes. The ROM is a non-volatile storage unit in which a control program such as a BIOS and an OS for causing the CPU to execute the various arithmetic processes are previously stored. The RAM is a volatile or non-volatile storage unit that stores various pieces of information and is used as a temporary storage memory (work area) for the various processes executed by the CPU. The vehicle control device 11 and the detection processing device 19 control the work vehicle 10 by causing the CPU to execute the various control programs previously stored in the ROM or the storage unit 12.

The detection processing device 19 acquires measurement information from the obstacle sensor 18 and determines whether or not the detection area K0 includes an obstacle on the basis of the measurement information. Specifically, as illustrated in FIG. 1, the detection processing device 19 includes various processing units such as an acquisition processing unit 111 and a detection processing unit 112. The detection processing device 19 functions as the various processing units by causing the CPU to execute the various processes according to the automatic traveling program. Further, some or all of the processing units may be configured by an electronic circuit. The automatic traveling program may be a program for causing a plurality of processors to function as the processing units.

The acquisition processing unit 111 acquires the measurement information from the one or more obstacle sensors 18. Specifically, the acquisition processing unit 111 acquires the measurement information of the detection area K0 from the obstacle sensor 18 installed at the front part of the work vehicle 10. For example, when an obstacle (a person) enters the detection area K0, the acquisition processing unit 111 acquires a measurement distance measured by the obstacle sensor 18.

Further, the acquisition processing unit 111 acquires captured images from the one or more cameras 15. For example, the acquisition processing unit 111 acquires the respective captured images of the imaging areas K1 to K5 from the five cameras 15F, 15B, 15R, 15L and 15C installed on the work vehicle 10 and the work machine 14, frame by frame. The acquisition processing unit 111 stores the acquired captured images in the storage unit 12 with imaging time. The acquisition processing unit 111 outputs image data of the acquired captured images to the operation terminal 20.

The detection processing unit 112 detects an obstacle on the basis of the measurement information acquired by the acquisition processing unit 111. Specifically, the detection processing unit 112 determines whether or not the detection area K0 includes the obstacle on the basis of the above measurement information. The detection processing unit 112 outputs a detection result to the operation terminal 20.

The vehicle control device 11 controls the movement of the work vehicle 10 in accordance with various user operation to the work vehicle 10. The vehicle control device 11 executes the automatic traveling process of the work vehicle 10 on the basis of the current position of the work vehicle 10 calculated by the positioning device 17 and the travel route R generated in advance.

As illustrated in FIG. 1, the vehicle control device 11 includes various types of processing units such as a travel processing unit 113. The vehicle control device 11 functions as the various processing units by causing the CPU to execute the various processes according to the automatic traveling program. Further, some or all of the processing units may be configured by an electronic circuit. The automatic traveling program may be a program for causing a plurality of processors to function as the processing units.

The travel processing unit 113 controls traveling of the work vehicle 10. Specifically, the travel processing unit 113 causes the work vehicle 10 to start automatic traveling after acquiring a work start instruction from the operation terminal 20. For example, when the operator presses a work start button on an operation screen of the operation terminal 20, the operation terminal 20 outputs the work start instruction to the work vehicle 10. The travel processing unit 113 starts the automatic traveling of the work vehicle 10 when the work start instruction is acquired from the operation terminal 20. Consequently, the work vehicle 10 starts traveling automatically according to the travel route R, and starts work by the work machine 14. The travel route R along which the work vehicle 10 travels is generated, for example, by the operation terminal 20. The work vehicle 10 acquires the travel route R from the operation terminal 20 and automatically travels in the field F according to the travel route R.

Further, the travel processing unit 113 stops the automatic traveling of the work vehicle 10 when acquiring a travel stop instruction from the operation terminal 20. For example, when an operator presses a travel stop button on the operation screen of the operation terminal 20, the operation terminal 20 outputs the travel stop instruction to the work vehicle 10.

The travel processing unit 113 stops the automatic traveling of the work vehicle 10 when the detection processing unit 112 detects an obstacle. For example, when the detection processing unit 112 detects an obstacle in the range of 3 m to 8 m in front of the work vehicle 10, the travel processing unit 113 causes the work vehicle 10 to travel at a reduced speed. When the detection processing unit 112 detects an obstacle in the range up to 3 m in front of the work vehicle 10, the travel processing unit 113 stops (emergency stop) the work vehicle 10.

### [Operation Terminal 20]

As illustrated in FIG. 1, the operation terminal 20 is an information processing device that includes an operation control unit 21, a storage unit 22, an operation display unit 23, a communication unit 24, and the like. The operation terminal 20 may be composed of a portable terminal such as a tablet terminal and a smartphone.

The communication unit 24 is a communication interface that connects the operation terminal 20 to the communication network N1 by wire or wirelessly and executes data communication according to a predetermined communication protocol with one or more external devices such as the work vehicles 10 via the communication network N1.

The operation display unit 23 is a user interface that includes a display unit such as a liquid crystal display and an organic EL display that displays various pieces of information, and an operation unit such as a touch panel, a mouse, and a keyboard that receives operation. On an operation screen displayed on the display unit, the operator can operate the operation unit to register various kinds of information (such as later-described work vehicle information, field information, and work information). Further, the operator can also operate the operation unit to provide the work starting instruction, the travel stop instruction, and the like to the work vehicle 10. Furthermore, at a location away from the work vehicle 10, the operator can comprehend a travel status of the work vehicle 10, which travels automatically along the travel route R in the farm field F, from a travel trajectory that is displayed on the operation terminal 20.

The storage unit 22 is a non-volatile storage unit such as an HDD and an SSD that stores various pieces of information. The storage unit 22 stores a control program such as an automatic traveling program for causing the operation control unit 21 to perform the automatic traveling process (see FIG. 11) described below. For example, the automatic traveling program is non-temporarily recorded in a computer-readable recording medium such as a CD and a DVD, read by a predetermined reading device (not illustrated), and stored in the storage unit 22. The automatic traveling program may be downloaded from a server (not illustrated) via the communication network N1 to the operation terminal 20 and stored in the storage unit 22.

In addition, data such as work vehicle information D1 which is information related to the work vehicle 10, travel route information D2 which is information related to the travel route, and travel feasibility information D3 which is information indicating whether or not the work vehicle 10 can travel along the travel route are stored in the storage unit 22.

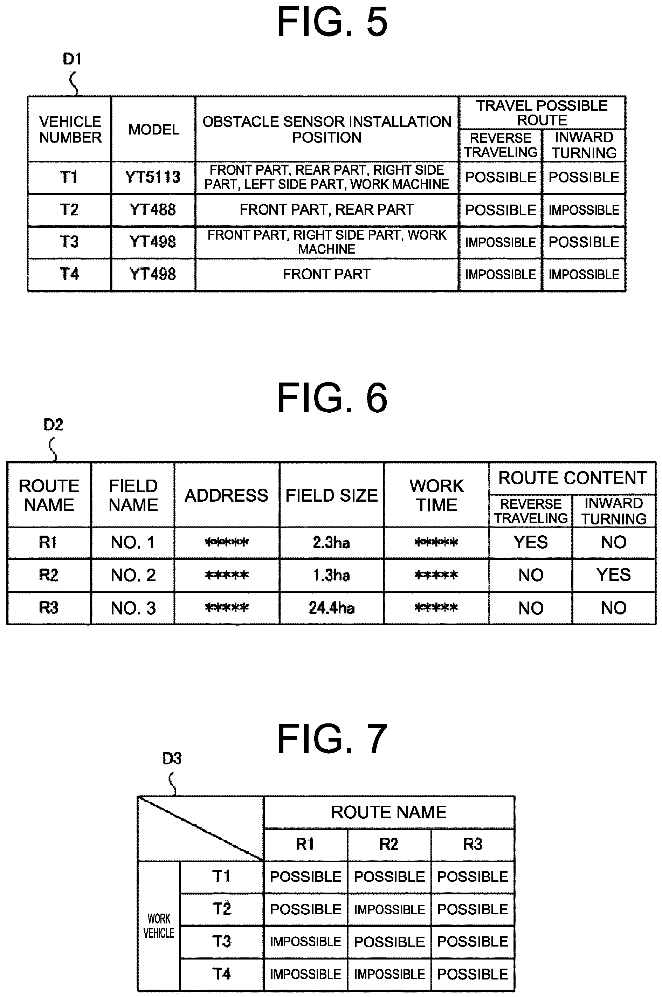

FIG. 5 illustrates an example of the work vehicle information D1. As illustrated in FIG. 5, the work vehicle information D1 includes information such as a vehicle number, a model, an installation position of the obstacle sensor 18, and a possible travel routes for each work vehicle 10. The vehicle number is identification information of the work vehicle 10. The model is a model of the work vehicle 10. The installation position of the obstacle sensor 18 is an installation position of the obstacle sensor 18 in the work vehicle 10.

The travel possible route is a travel route, which is set in accordance with the installation position of the obstacle sensor 18, and along which the work vehicle 10 can travel.
For example, in a case where the obstacle sensor 18 is installed only on the front part of the work vehicle 10 (see FIG. 4A), the work vehicle 10 can detect an obstacle at the time of forward traveling, but cannot detect any obstacle in the traveling direction at the time of reverse traveling and at the time of inward turning. Therefore, for example, for a work vehicle T4 with the obstacle sensor 18 installed only at the front part of the work vehicle 10, "impossible" is registered for a reverse travel route and an inward turning route. For example, for a work vehicle T2 with the obstacle sensor 18 installed at the front part and the rear part of the work vehicle 10, "possible" is registered for a reverse travel route, and "impossible" is registered for an inward turning route.

The storage unit 22 may store work vehicle information D1 related to the one work vehicle 10, or may store work vehicle information D1 related to a plurality of the work vehicles 10. For example, in a case where a particular operator owns a plurality of the work vehicles 10, the work vehicle information D1 related to each work vehicle 10 is stored in the storage unit 22.

FIG. 6 is an example of the travel route information D2. As illustrated in FIG. 6, the travel route information D2 includes information such as a route name, a field name, an address, field size, work time, and a route content for each travel route. The route name is a route name of the travel route R generated in the operation terminal 20. The field name is a name of a field to be worked on for which the travel route is set. The address is an address of the field and the field size is size of the field. The work time is a time required to work the field by the work vehicle 10. The route content is information indicating whether or not the travel route includes a reverse travel route and whether or not the travel route includes an inward turning route. In a case where the travel route include the reverse travel route, "Yes" is registered in " reverse traveling" of the route content, and in a case where the travel route does not include the reverse travel route, "No" is registered in "reverse traveling" of the route content. In a case where the travel route include the inward turning route, "Yes" is registered in "inward turning " of the route content, and in a case where the travel route does not include the inward turning route, "No" is registered in "inward turning" of the route content.

The storage unit 22 may store travel route information D2 related to the one work vehicle 10, or may store travel route information D2 related to a plurality of the work vehicles 10. For example, in a case where a particular operator generates a plurality of the travel routes for a plurality of fields owned by himself, the travel route information D2 for each work vehicle 10 is stored in the storage unit 22. One travel route may be set for one field, or a plurality of travel routes may be set for one field.

FIG. 7 illustrates an example of the travel feasibility information D3. As illustrated in FIG. 7, in the travel feasibility information D3, information indicating whether or not the work vehicle 10 can travel on each travel route registered in the travel route information D2 is registered for each work vehicle 10 registered in the work vehicle information D1. For example, in the work vehicle T4, the reverse travel route and the inward turning route are each set to "impossible" (see FIG. 5), and therefore "impossible" is registered for each of the travel routes R1 and R2 including at least any one of "reverse traveling" and "inward turning", and "possible" is registered for the travel route R3 including both "reverse traveling" and "inward turning". For example, in work vehicle T2, the reverse travel route is set to "possible", and the inward turning route is set to "impossible" (see FIG. 5), and therefore "impossible" is registered for the travel route R2 including "inward turning", and "possible" is registered for the travel routes R1 and R3 not including "inward turning".

As another embodiment, some or all of the information such as the work vehicle information D1, the travel route information D2, and the travel feasibility information D3 may be stored on a server accessible from the operation terminal 20. An operator may operate to register the work vehicle information D1, the travel route information D2, and the travel feasibility information D3 in the server (e.g., a personal computer) described above. In this case, the operation control unit 21 may acquire the information from the server and execute each process such as the automatic traveling process (see FIG. 11) described below.

The operation control unit 21 has control devices such as a CPU, a ROM, and a RAM. The CPU is a processor that executes various arithmetic processes. The ROM is a non-volatile storage unit in which a control program such as a BIOS and an OS for causing the CPU to execute the various arithmetic processes are previously stored. The RAM is a volatile or non-volatile storage unit that stores various pieces of information and is used as a temporary storage memory (work area) for the various processes executed by the CPU. The operation control unit 21 controls the operation terminal 20 by causing the CPU to execute the various control programs previously stored in the ROM or the storage unit 22.

As illustrated in FIG. 1, the operation control unit 21 includes various processing units such as a vehicle setting processing unit 211, a field setting processing unit 212, a work setting processing unit 213, a route generation processing unit 214, a route acquisition processing unit 215, a determination processing unit 216, a report processing unit 217, an output processing unit 218, and a display processing unit 219. The operation control unit 21 functions as the various processing units by causing the CPU to execute the various processes according to the control programs. Further, some or all of the processing units may be configured by an electronic circuit. The control programs may be programs for causing a plurality of processing units to function as the processing units.

The vehicle setting processing unit 211 sets information related to the work vehicle 10 (hereinafter referred to as "work vehicle information"). The vehicle setting processing unit 211 sets information related to the model of the work vehicle 10, the position where the positioning antenna 174 is mounted on the work vehicle 10, the type of the work machine 14, the size and the shape of the work machine 14, the position of the work machine 14 with respect to the work vehicle 10, the vehicle speed and the engine rotation speed of the work vehicle 10 during work, the vehicle speed and the engine rotation speed of the work vehicle 10 during turning, and the like by registration operation on the operation terminal 20 by the operator.

The field setting processing unit 212 sets information related to the field F (hereinafter referred to as "field information"). The field setting processing unit 212 sets information related to the position and the shape of the field F, the work start position S to start work, the work end position G to finish work (see FIG. 3), and the work direction, and the like by registration operation on the operation terminal 20.

The work direction means a direction in which the work vehicle 10 travels while causing the work machine 14 to work in a work area, which is an area excluding non-work areas such as a headland and a non-cultivated land from the field F.

For example, an operator who rides in the work vehicle 10 drives along an outer periphery of the field F once, and records a transition of the position information of the positioning antenna 174 at that time, so that the information on the position and the shape of the field F can be acquired automatically. Further, the position and the shape of the field F can be acquired on the basis of a polygon shape acquired by operation of the operation terminal 20 while displaying a map on the operation terminal 20 and designation of a plurality of points on the map by the operator. An area specified by the acquired position and shape of the field F is an area (travel area) in which the work vehicle 10 can travel.

The work setting processing unit 213 sets information as to how to specifically perform work (hereinafter referred to as "work information"). The work setting processing unit 213 is configured to set, as the work information, presence or absence of cooperative work between the work vehicle 10 (unmanned tractor) and the manned work vehicle 10, the skip number, which is the number of work routes skipped when the work vehicle 10 turns in the headland, the width of the headland, the width of the non-cultivated land, and the like.

The route generation processing unit 214 generates the travel route R, which is a route for causing the work vehicle 10 to automatically travel, on the basis of the aforementioned setting information. The travel route R is, for example, a work route from the work start position S to the work end position G (see FIG. 3). The travel route R illustrated in FIG. 3 is a route for causing the work vehicle 10 to reciprocate in parallel in the work area of the field F. The route generation processing unit 214 can generate and store the travel route R for the work vehicle 10 on the basis of the set information set in each of the vehicle setting processing unit 211, the field setting processing unit 212, and the work setting processing unit 213.

Specifically, the route generation processing unit 214 generates the travel route R (see FIG. 3) on the basis of the work start position S and the work end position G registered in the field setting. The travel route R is not limited to the route illustrated in FIG. 3.

The operation control unit 21 stores the work vehicle information D1 (see FIG. 5), the travel route information D2 (see FIG. 6), and the travel feasibility information D3 (see FIG. 7) in the storage unit 22. Specifically, the operation control unit 21 stores the work vehicle information D1, the travel route information D2, and the travel feasibility information D3 in the storage unit 22 on the basis of the setting information set in each of the vehicle setting processing unit 211, the field setting processing unit 212, and the work setting processing unit 213.

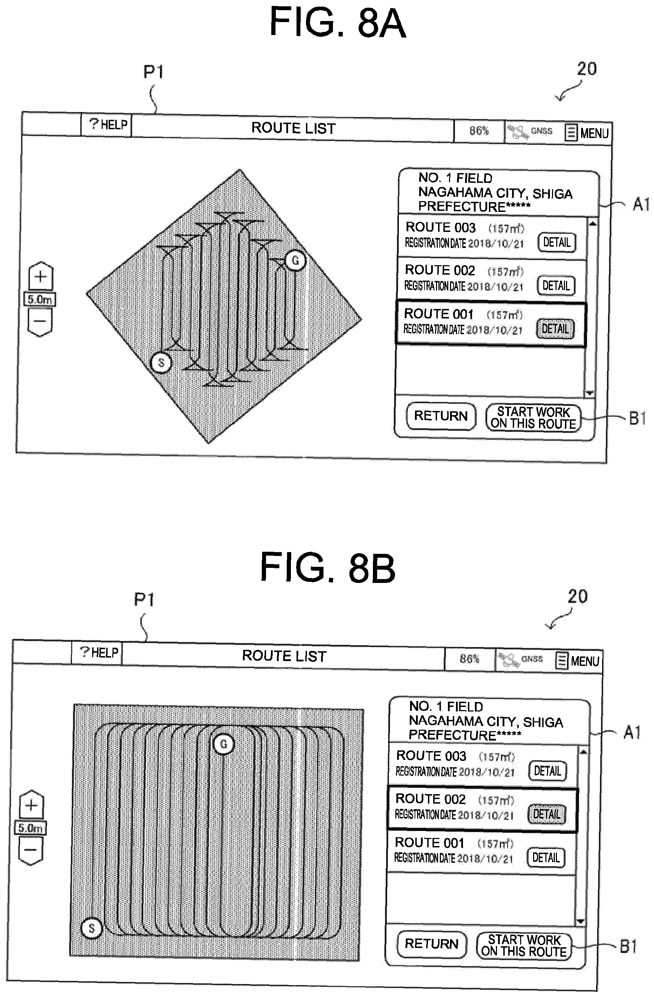

The route acquisition processing unit 215 acquires the travel route R for the work vehicle 10. Specifically, in a case where the operator starts work by the work vehicle 10 in the predetermined field F, the operator selects the desired travel route R from a route list A1 including a plurality of travel routes R generated by the route generation processing unit 214 on a route selection screen P1 displayed on the operation terminal 20 (see FIG. 8A and other drawing). The route acquisition processing unit 215 acquires a route selected by the operator (hereinafter referred to as a selected route). FIG. 8A illustrates a state in which a selected route of "Route 001" is selected for No. 1 field by the operator. FIG. 8B illustrates a state in which a selected route of "Route 002" is selected for No. 1 field by the operator. Detailed information on the travel route is displayed by pressing a detailed button of the travel route in the route list A1. The route acquisition processing unit 215 is an example of the route acquisition processing unit of the present invention.

The determination processing unit 216 determines whether or not the selected route acquired by the route acquisition processing unit 215 includes a travel route that goes in the direction different from the direction of the detection area K0 of the obstacle sensor 18 (corresponding to the first travel route of the present invention). For example, in a case where the work vehicle 10 which performs the work is the work vehicle T4 (see FIG. 5) mounted with the obstacle sensor 18 only at the front part, and the selected route acquired by the route acquisition processing unit 215 is the travel route with the route name "R1" (see FIG. 6), the determination processing unit 216 determines that the route includes a rearward travel route (reverse travel route), the direction of which is different from the direction of the detection area K0 of the obstacle sensor 18 (forward). The reverse travel route is an example of the first travel route of the present invention.

For example, in a case where the work vehicle 10 which performs the work is the work vehicle T4 (see FIG. 5) mounted with the obstacle sensor 18 only at the front part, and the selected route acquired by the route acquisition processing unit 215 is the traveling route with the route name "R2" (see FIG. 6), the determination processing unit 216 determines that the route includes the inward travel route (inward turning route), the direction of which is different from the direction of the obstacle sensor 18 (forward). The inward turning route is an example of the first travel route of the present invention.

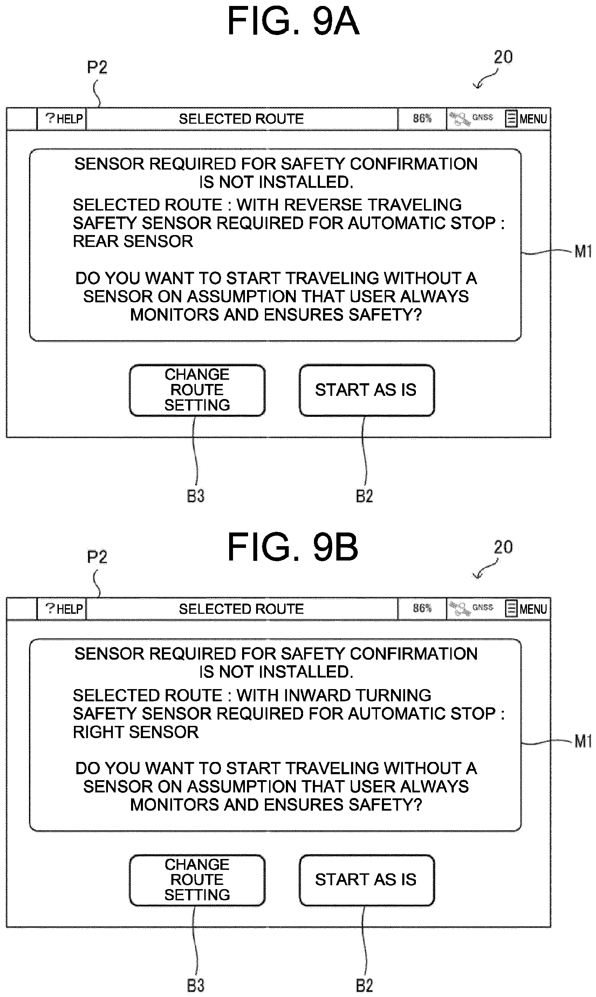

The report processing unit 217 reports an inquiry whether or not to start automatic traveling of the work vehicle 10 in a state in which the selected route acquired by the route acquisition processing unit 215 includes a travel route that goes in a direction different from the direction of the detection area K0 of the obstacle sensor 18. For example, as illustrated in FIG. 8A, in a case where the operator selects the route "001" (corresponding to the route name "R1") and presses a route decision button B1 in work by the work vehicle T4 (see FIG. 5), the selected route includes a travel route (reverse traveling route) that goes in the direction different from the direction of the detection area K0 (forward), and therefore the report processing unit 217 displays the inquiry illustrated in FIG. 9A on the operation terminal 20. The report processing unit 217 is an example of a report processing unit of the present invention.

For example, the report processing unit 217 displays, on the operation terminal 20, a selection screen P2 that enables selection of a work start instruction to start the automatic traveling of the selected route or a route change instruction to change the selected route. The report processing unit 217 displays, on the selection screen P2, warning information for calling attention in a case where the automatic traveling of the selected route is started. For example, the report processing unit 217 displays, on the selection screen P2, a warning message M1 including a fact that the rear obstacle sensor 18 required for traveling along the reverse traveling route is not installed, a fact that a user monitors and ensures safety when automatic traveling is started without the rear obstacle sensor 18 installed, a fact that automatic traveling is permitted in the state where the rear obstacle sensor 18 is not installed, and a disclaimer. In addition, the report processing unit 217 displays, on the selection screen P2, a work start button B2 which gives an instruction to start automatic traveling (work start instruction) in the same state (no rear obstacle sensor 18 is installed), and a change button B3 which gives an instruction to change the setting of the selected route described above (route change instruction).

As illustrated in FIG. 8B, for example, in a case where the operator selects the route "002" (corresponding to route name "R2") and presses the route determination button B1 in the work by the work vehicle T4 (see FIG. 5), the selected route includes the traveling route (inward turning route) that goes in the different direction from the direction of the detection area K0 (forward). Therefore, the report processing unit 217 causes the selection screen P2 illustrated in FIG. 9B to be displayed on the operation terminal 20.

When the operator presses the change button B3 on the selection screen P2, the report processing unit 217 displays the route selection screen P1 (see FIG. 8A and FIG. 8B) on the operation terminal 20 again. The operator can change the selected route on the route selection screen P1.

As another embodiment, the report processing unit 217 may present a travel route that does not include a reverse traveling route when the change button B3 is selected (route change instruction) by the operator on the route selection screen P1 illustrated in FIG. 8A. The report processing unit 217 may also present a travel route that does not include the inward turning route when the change button B3 is selected (route change instruction) by the operator on the route selection screen P1 illustrated in FIG. 8B. In other words, when the route change instruction is selected, the report processing unit 217 presents a travel route that does not include the travel route in the different direction from the direction of the detection area K0 of the obstacle sensor 18 (the first travel route of the invention). Consequently, it is possible to prevent the travel route that includes the travel route that goes in the direction different from the direction of the detection area K0 of the obstacle sensor 18 (such as the reverse traveling route and the inward turning route) from being selected as the selection route.

When the operator presses the work start button B2 on the selection screen P2, the output processing unit 218 outputs the information on the selected route to the work vehicle 10.

The work vehicle 10 is configured to autonomously travel along the travel route R while detecting the current position of the work vehicle 10 with the positioning antenna 174, while the data of the travel route R (selected route) generated at the operation terminal 20 is transferred to the work vehicle 10 and stored in the storage unit 12. The current position of the work vehicle 10 usually coincides with the position of the positioning antenna 174.

The work vehicle 10 is configured to be able to travel automatically when the current position is located in the field F, and is configured to be not able to travel automatically when the current position is located outside the field F (e.g., on a public road or the like). The work vehicle 10 is configured to be able to travel automatically, for example, when the current position coincides with the work start position S.

In a case where the current position coincides with the work start position S, when the operator presses the work start button on the operation screen to give the work start instruction, the work vehicle 10 starts automatic traveling by the traveling processing unit 113 and starts work by the work machine 14 (see FIG. 2). That is, the operation control unit 21 permits the automatic traveling of the work vehicle 10 on the condition that the current position coincides with the work start position S. The condition for permitting the automatic traveling of the work vehicle 10 is not limited to the above condition.

The travel processing unit 113 of the work vehicle 10 causes the work vehicle 10 to automatically travel from the work start position S to the work end position G on the basis of the traveling route R (selected route) acquired from the operation terminal 20. When the work vehicle 10 finishes the work, the travel processing unit 113 may cause the work vehicle 10 to automatically travel from the work end position G to an entrance of the field F. When the work vehicle 10 is automatically traveling, the operation control unit 21 can receive the status of the work vehicle 10 (such as the position and the travel speed) from the work vehicle 10 and display the received status on the operation display unit 23.

As another embodiment, the operation control unit 21 may be able to select the work start instruction for automatic traveling when a monitoring unit (such as a camera and a sensor) capable of monitoring a predetermined area in the direction different from the direction of the detection area K0 of the obstacle sensor 18 is installed on the work vehicle 10. For example, the report processing unit 217 is able to select the work start instruction for automatic traveling when the camera 15 (an example of the monitoring unit of the present invention) including the direction different from the direction of the detection area K0 of the obstacle sensor 18 in an imaging area is installed in the work vehicle 10. For example, in a case where the detection area K0 of the obstacle sensor 18 is in front of the work vehicle 10 and the selected route includes the reverse traveling route, when the camera 15B with the rear side set as the imaging area K2 is installed in the work vehicle 10, the report processing unit 217 displays the work start button B2 on the selection screen P2. On the other hand, when the camera 15B is not installed in the work vehicle 10, the report processing unit 217 does not display the work start button B2 on the selection screen P2. Thus, the operation control unit 21 may be configured to permit traveling in the direction of the predetermined area when the predetermined area can be monitored by at least one of the obstacle sensor 18 and the camera 15.

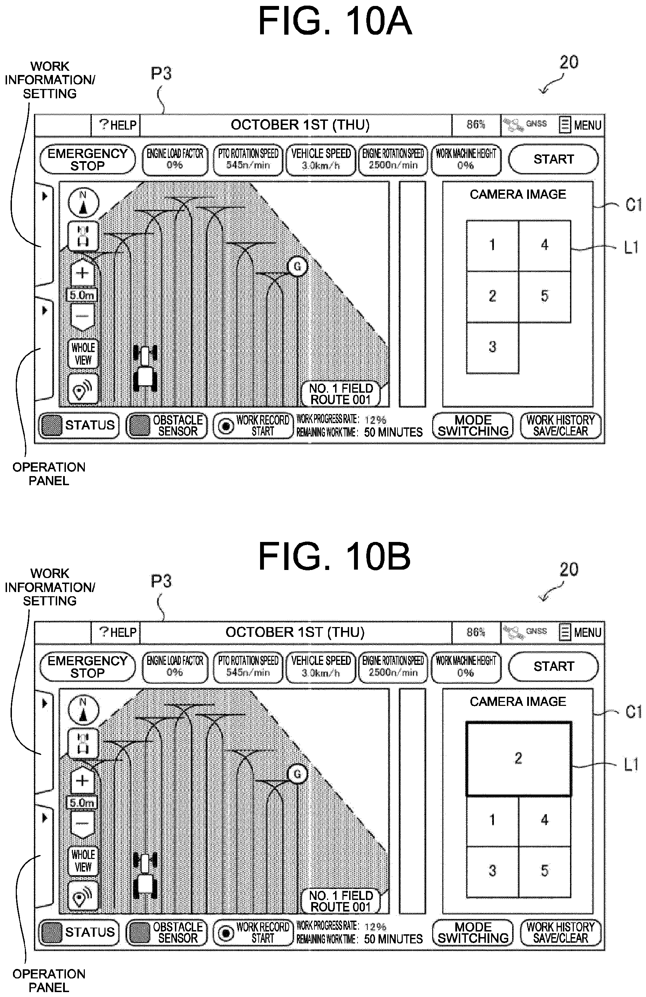

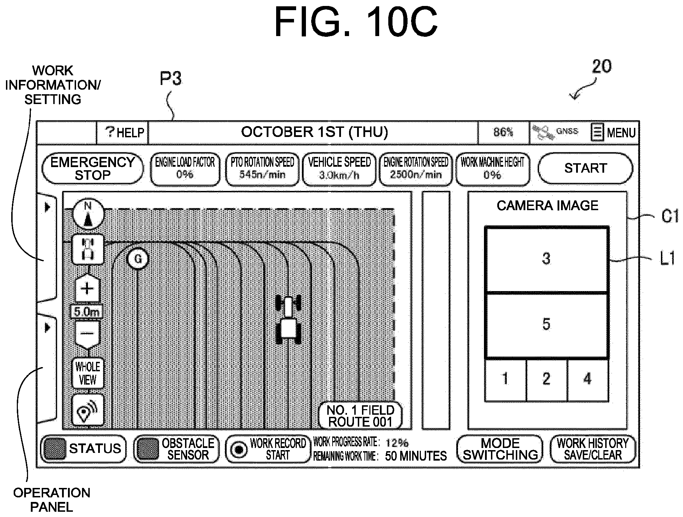

The display processing unit 219 displays, on the operation terminal 20, the captured image captured by the camera 15 while the work vehicle 10 is traveling automatically. Specifically, as illustrated in FIG. 10A, the display processing unit 219 displays a camera image display column C1, which displays the captured image captured by each camera 15, on a travel status screen P3, which displays a state of automatic traveling of the work vehicle 10. The travel status screen P3 displays the current status of the work vehicle 10 during automatic traveling in real time. The operator can grasp the current traveling status and the current working status of the work vehicle 10 on the travel status screen P3.

The display processing unit 219 displays each image display column L1 in a camera image display column C1 in accordance with preset layout. FIG. 10A illustrates an example of the travel status screen P3 with the captured image displayed in each image display column L1. The captured image displayed in each image display column L1 is updated in real time. The numbers "1" to "5" in the respective image display column L1 correspond to cameras 15F (camera 1), 15B (camera 2), 15R (camera 3), 15L (camera 4) and 15C (camera 5) illustrated in FIG. 4B, respectively. In FIG. 10A and other drawings, display examples of actual captured images are omitted.

In the travel status screen P3, the display processing unit 219 highlights and displays the image captured by each camera 15 whose imaging area includes the direction different from the direction of the detection area K0 of the obstacle sensor 18. For example, as illustrated in FIG. 10B, when the detection area K0 of the obstacle sensor 18 is in front of the work vehicle 10 and the selected route includes the reverse traveling route, the display processing unit 219 enlarges and displays the image captured by the camera 15B (camera 2) that includes the rear in the imaging area K2. The display processing unit 219 may display the image display column L1 corresponding to the camera 15B (camera 2) in color, or may light up or blink the image display column L1. The display processing unit 219 may display only the image display column L1 corresponding to the camera 15B (camera 2) in the camera image display column C1 and hide the image display column L1 corresponding to the other camera 15. The display processing unit 219 is an example of the display processing unit of the present invention.

For example, in a case where the detection area K0 of the obstacle sensor 18 is in front of the work vehicle 10 and the selected route includes the inward turning route, the display processing unit 219 enlarges and displays the image captured by the camera 15R (camera 3) that includes the right side in the image area K3, and the image captured by the camera 15C (camera 5) that includes the front of the work machine 14 in the image area K5. Consequently, in a case where the work vehicle 10 travels in the direction different from the direction of the detection area K0 of the obstacle sensor 18, the operator can monitor the above direction by the image captured by the camera 15 which images the above direction.

As another embodiment, the detection processing unit 112 of the work vehicle 10 may detect an obstacle on the basis of the image captured by the camera 15 that images the direction different from the direction of the detection area K0 of the obstacle sensor 18. For example, the detection processing unit 112 detects a specific obstacle such as a person, an object, and the like by image analysis of the captured image. The travel processing unit 113 may stop the automatic traveling of the work vehicle 10 when the detection processing unit 112 detects an obstacle on the basis of the image captured.

The operation terminal 20 may be able to access a Web site (an agricultural support site) of an agricultural support service provided by a server (not illustrated) via the communication network N1. In this case, the operation terminal 20 can function as an operation terminal for the server by execution of a browser program by the operation control unit 21. The server includes the above processing units to execute each of the processes.

As another embodiment, each function of the vehicle control device 11 and the detection processing device 19 described above may be included in the operation control unit 21 of the operation terminal 20. That is, for example, the operation control unit 21 may acquire measurement information from each of the obstacle sensors 18 of the work vehicle 10 and execute the process of detecting an obstacle. Each function of the detection processing device 19 (the acquisition processing unit 111 and the detection processing unit 112) may be included in the vehicle control device 11.

### [Automatic Traveling Process]

Hereinafter, an example of the automatic traveling process executed by the vehicle control device 11, the detection processing device 19, and the operation control unit 21 will be described with reference to FIG. 11. For example, the automatic traveling process is started by the vehicle control device 11, the detection processing device 19, and the operation control unit 21 when an operator starts operation for setting a travel route for the work vehicle 10.

The present invention may be taken as an invention of an automatic traveling method for executing part or all of the automatic traveling process by the vehicle control device 11, the detection processing device 19, and the operation control unit 21, or as an invention of an automatic traveling program for causing the vehicle control device 11 and the operation control unit 21 to execute part or all of the automatic traveling method. The automatic traveling process may be executed by one or more processors.

In Step S1, the operation control unit 21 displays the route selection screen P1 (see FIG. 8A and other drawing) on the operation terminal 20.

Next, in Step S2, the operation control unit 21 acquires, on the route selection screen P1, a selected route selected by the operator from the route list A1 including a plurality of the travel routes R generated by a route generation process.

Next, in Step S3, the operation control unit 21 determines whether or not the acquired selected route includes a travel route that goes in the direction different from the direction of the detection area K0 of the obstacle sensor 18.

For example, in a case where the work vehicle 10 which performs the work is the work vehicle T4 provided with the obstacle sensor 18 only at the front part (see FIG 4A and FIG. 5), and the acquired selected route is the travel route with the route name "R1" (see FIG. 6), the operation control unit 21 determines that the acquired selected route includes the rearward travel route (reverse travel route), the direction of which is different from the direction (forward) of the detection area K0 of the obstacle sensor 18.

For example, in a case where the work vehicle 10 which performs the work is the work vehicle T4 provided with the obstacle sensor 18 only at the front part (see FIG. 4A and FIG. 5), and the acquired selected route is the travel route with the route name "R2" (see FIG. 6), the operation control unit 21 determines that the acquired selected route includes the inner travel route (inward route), the direction of which is different from the direction (forward) of the detection area K0 of the obstacle sensor 18.

In a case where the selected route includes the travel route in the different from the direction of the detection area K0 of the obstacle sensor 18 (Yes in S3), the process proceeds to Step S4. On the other hand, in a case where the selected route does not include the travel route in the different from the direction of the detection area K0 of the obstacle sensor 18 (No in S3), the process proceeds to Step S6.

In Step S4, the operation control unit 21 reports an inquiry as to whether or not to start automatic traveling of the work vehicle 10. For example, as illustrated in FIG. 8A, when the operator selects the route "001" (corresponding to the route name "R1") in the work by the work vehicle T4 (see FIG. 5) and presses the route determination button B1, the operation control unit 21 displays the selection screen P2 illustrated in FIG. 9A on operation terminal 20. As illustrated in FIG. 8B, for example, in a case where the operator selects the route "002" (corresponding to the route name "R2") in the work by the work vehicle T4 (see FIG. 5) and presses the route determination button B1, the operation control unit 21 displays the selection screen P2 illustrated in FIG. 9B on the operation terminal 20.

In addition, the operation control unit 21 displays, on the selection screen P2, the warning message M1, the work start button B2 to give an instruction to start automatic traveling (work start instruction) in the same state (state in which no rear obstacle sensor 18 is installed), and the change button B3 to change the setting of the selected route (route change instruction).

Next, in Step S5, the operation control unit 21 determines whether or not the work start instruction is received. In a state where the operator presses the work start button B2 on the selection screen P2 (see FIG. 9A and FIG. 9B) and the operation control unit 21 receives the work start instruction (Yes in S5), the process proceeds to Step S6. In a case where the operation control unit 21 does not receive the work start instruction (No in S5), the process proceeds to Step S51.

In Step S51, the operation control unit 21 determines whether or not the route change instruction is received. In a case where the operator presses the change button B3 on the selection screen P2 (see FIG. 9A and FIG. 9B) and the operation control unit 21 receives the route change instruction (Yes in S51), the process returns to Step S1. In a case where the operation control unit 21 does not receive the route change instruction (No in S51), the process returns to Step S5.

In Step S6, the vehicle control device 11 starts automatic traveling of the work vehicle 10. Specifically, when the operation control unit 21 outputs the information on the selected route to the work vehicle 10, the vehicle control device 11 acquires the selected route and starts automatic traveling along the selected route.

Next, in Step S7, the operation control unit 21 highlights and displays, on the travel status screen P3, the image captured by the camera 15 that includes, in the imaging area, the direction different from the direction of the detection area K0 of the obstacle sensor 18. For example, as illustrated in FIG. 10B, in a case where the detection area K0 of the obstacle sensor 18 is in front of the work vehicle 10 and the selected route includes the reverse travel route, the operation control unit 21 enlarges and displays the image captured by the camera 15B (camera 2) that includes the rear in the imaging area K2.

Next, in Step S8, the detection processing device 19 determines whether or not an obstacle is detected. Specifically, the detection processing device 19 determines whether or not the obstacle is included in the detection area K0 on the basis of the measurement information from the obstacle sensor 18. In a case where the detection processing device 19 detects an obstacle (Yes in S8), the process proceeds to Step S9. On the other hand, in a case where the detection processing device 19 does not detect any obstacle (No in S8), the process proceeds to Step S10.

In Step S9, the vehicle control device 11 stops the automatic traveling of the work vehicle 10. In a case where the obstacle is then eliminated, the vehicle control device 11 resumes automatic traveling on the basis of the instruction by the operator, for example.

Next, in Step S10, the vehicle control device 11 determines whether or not the work vehicle 10 ends the work. In a case where the work vehicle 10 ends the work (Yes in S10), the process ends. On the other hand, in a case where the work vehicle 10 does not end the work (No in S10), the process returns to Step S7. Thus, the detection processing device 19 performs traveling and work while monitoring by the obstacle sensor 18 and the camera 15 until the end of the predetermined work in a case where no obstacle is detected. The vehicle control device 11, the detection processing device 19, and the operation control unit 21 execute the automatic traveling process as described above.

As described above, the automatic traveling system 1 according to this embodiment acquires the travel route (selected route) for the work vehicle 10, and reports an inquiry as to whether or not to start automatic traveling of the work vehicle 10 in a case where the selected route includes the travel route that goes the direction different from the direction of the detection area K0 of the obstacle sensor 18 which is installed in the work vehicle 10 and detects an obstacle around the work vehicle 10. Thus, the automatic traveling system 1 calls attention of an operator by displaying the selection screen P2 (see FIG. 9A and FIG. 9B) including the warning message M1 on the operation terminal 20 in a case where the selected route includes, in the selected route, the travel route that goes in the direction different from the detection area K0 of the obstacle sensor 18, so that safety of the work vehicle 10 is secured. The operator can start automatic traveling of the work vehicle 10 by monitoring an area that cannot be detected by the obstacle sensor 18. The automatic traveling system 1 can also secure safety by capturing an image of the area that cannot be detected by the obstacle sensor 18 with the camera 15 and displaying the captured image on the operation terminal 20. Accordingly, the obstacle sensor 18 does not need to be installed in all directions of the work vehicle 10, and therefore it is possible to prevent increase in cost while securing the safety of the work vehicle 10.

In the above embodiment, the report processing unit 217 reports an inquiry as to whether or not automatic traveling of the work vehicle 10 is started at the time of starting automatic traveling of the work vehicle 10. Specifically, at the time of giving the work start instruction to the work vehicle 10, the report processing unit 217 displays, on the operation display unit 23, the selection screen P2 that enables selection of the work start instruction to start automatic traveling on the selected route or the route change instruction to change the selected route.

As another embodiment of the invention, the report processing unit 217 may report an inquiry as to whether or not to start automatic traveling of the work vehicle 10 at the time of generating the travel route of the work vehicle 10. Specifically, at the time of generating the travel route of the work vehicle 10, the report processing unit 217 may display, on the operation display unit 23, the selection screen P2 that enables selection of the work start instruction to start automatic traveling on the selected route or the route change instruction to change the generated route. Consequently, it is possible to alert the operator prior to a work start time point by reporting the inquiry at the time of generating the route.

The report processing unit 217 may also report the inquiry at each of the time point when the travel route of the work vehicle 10 is generated and the time point when the automatic traveling of the work vehicle 10 is started. Consequently, even in a case where the work vehicle 10 at the time point when the travel route of the work vehicle 10 is different from the work vehicle 10 at the time point when the automatic traveling of the work vehicle 10 is started, it is possible to secure safety by alerting the operator to the inquiry at both the time points.

As another embodiment of the present invention, in a case where the selected route is set for each of a plurality of the work vehicles 10, the reporting processing unit 217 may report the inquiry for each of the selected routes. On the one operation terminal 20, the selected route can be set for each of a plurality of the work vehicles 10. In this case, the report processing unit 217 of the operation terminal 20 displays, on the operation display unit 23, the selection screen P2 that enables selection of the work start instruction to start automatic traveling of the selected route or the route change instruction to change the selected route for each of the selected routes. Consequently, whether or not automatic traveling on the selected route is performed can be set for each of the work vehicles 10. Accordingly, it is possible to secure the safety of a plurality of the work vehicles 10.

As another embodiment of the invention, the operation control unit 21 may present, to an operator, a suitable work vehicle 10 for the selected route among a plurality of the work vehicles 10. For example, in a case where an operator owns a plurality of work vehicles 10 and each work vehicle 10 is provided with obstacle sensors 18 at different positions, when the operator selects a field and a travel route, the operation control unit 21 extracts the work vehicle 10 provided with obstacle sensor 18 that includes the direction of the travel route in the detection area K0 and presents the extracted work vehicle to the operator. Consequently, it is possible to perform work by the work vehicle 10 which does not create a blind spot in the travel route. The operation control unit 21 can determine the most suitable work vehicle 10 for the travel route (selected route) by referring to the work vehicle information D1, the travel route information D2, and the travel feasibility information D.

As another embodiment of the present invention, the operation control unit 21 may present, to an operator, a travel route suitable for the work vehicle 10 among a plurality of travel routes. For example, in a case where an operator sets a plurality of travel routes, and the operator selects a field, the work vehicle 10, and the work machine 14, the operation control unit 21 extracts the travel route, on which the work vehicle 10 can travel, and presents the extracted travel route to the operator. Consequently, the work vehicle 10 can travel on the travel route where any blind spot is not created. The operation control unit 21 can determine an optimum travel route (selected route) for the work vehicle 10 by referring to the work vehicle information D1, the travel route information D2, and the travel feasibility information D.

## Claims

1. An automatic traveling method comprising
executing:
acquisition of a travel route for a work vehicle; and
reporting of an inquiry as to whether or not to start automatic traveling of the work vehicle in a case where the travel route includes a first travel route that goes in a direction different from a direction of a detection area of a detection unit that is installed in the work vehicle and detects an obstacle around the work vehicle.

2. The automatic traveling method according to claim 1, wherein
a selection screen that enables selection of a work start instruction to start the automatic traveling of the travel route, or a route change instruction to change the travel route is displayed.

3. The automatic traveling method according to claim 2, wherein
warning information for calling attention in a case where the automatic traveling of the travel route is started is further displayed on the selection screen.

4. The automatic traveling method according to claim 2 or 3, wherein
in a case where the route change instruction is selected, a travel route that does not include the first travel route is presented.

5. The automatic traveling method according to any one of claims 2 to 4, wherein
in a case where a monitoring unit capable of monitoring a predetermined area in a direction of the first travel route is installed in the work vehicle, the work start instruction is selectable.

6. The automatic traveling method according to claim 5, wherein
the monitoring unit is an imaging unit that images the predetermined area, and
a captured image by the imaging unit is highlighted and displayed.

7. The automatic traveling method according to any one of claims 1 to 6, wherein
in a case where the travel route is set corresponding to each of a plurality of the work vehicles, the inquiry is reported for each of the travel routes if the first travel route is included for that travel route.

8. The automatic traveling method according to any one of claims 1 to 7, wherein
the inquiry is reported at each of a time point when the travel route is generated and a time point when the automatic traveling is started.

9. An automatic traveling system comprising:
a route acquisition processing unit that acquires a travel route for a work vehicle; and
a report processing unit that reports an inquiry as to whether or not to start automatic traveling of the work vehicle in a case where the travel route acquired by the route acquisition processing unit includes a first travel route that goes in a direction different from a direction of a detection area of a detection unit that is installed in the work vehicle and detects an obstacle around the work vehicle.

10. An automatic traveling program for causing one or more processors to execute:
acquisition of a travel route for a work vehicle; and
reporting of an inquiry as to whether or not to start automatic traveling of the work vehicle in a case where the travel route includes a first travel route that goes in a direction different from a direction of a detection area of a detection unit that is installed in the work vehicle and detects an obstacle around the work vehicle.

## Patentansprüche

1. Automatisches Fahrverfahren, umfassend:
Ausführen:
einer Erfassung einer Fahrstrecke für ein Arbeitsfahrzeug; und
Melden einer Anfrage, ob automatisches Fahren des Arbeitsfahrzeugs gestartet werden soll oder nicht, in einem Fall, wo die Fahrstrecke eine erste Fahrstrecke beinhaltet, die in eine Richtung führt, die sich von einer Richtung eines Erkennungsbereichs einer Erkennungseinheit, die in dem Arbeitsfahrzeug eingebaut ist und ein Hindernis um das Arbeitsfahrzeug herum erkennt, unterscheidet.

2. Automatisches Fahrverfahren nach Anspruch 1, wobei
ein Auswahlbildschirm angezeigt wird, der eine Auswahl einer Arbeitsstartanweisung, um das automatische Fahren der Fahrstrecke zu starten, oder einer Streckenänderungsanweisung, um die Fahrstrecke zu ändern, ermöglicht.

3. Automatisches Fahrverfahren nach Anspruch 2, wobei
ferner Warninformationen zum Erregen von Aufmerksamkeit auf dem Auswahlbildschirm angezeigt werden, in einem Fall, wo das automatische Fahren der Fahrstrecke gestartet wird.

4. Automatisches Fahrverfahren nach Anspruch 2 oder 3, wobei
in einem Fall, wo die Streckenänderungsanweisung ausgewählt wird, eine Fahrstrecke dargestellt wird, die nicht die erste Fahrstrecke beinhaltet.

5. Automatisches Fahrverfahren nach einem der Ansprüche 2 bis 4, wobei
in einem Fall, wo eine Überwachungseinheit, die in der Lage ist, einen vorherbestimmten Bereich in einer Richtung der ersten Fahrstrecke zu überwachen, in dem Arbeitsfahrzeug eingebaut ist, die Arbeitsstartanweisung auswählbar ist.

6. Automatisches Fahrverfahren nach Anspruch 5, wobei
die Überwachungseinheit eine Bildgebungseinheit ist, die den vorherbestimmten Bereich abbildet, und
ein durch die Bildgebungseinheit aufgenommenes Bild hervorgehoben und angezeigt wird.

7. Automatisches Fahrverfahren nach einem der Ansprüche 1 bis 6, wobei
in einem Fall, wo die Fahrstrecke entsprechend jedem einer Vielzahl der Arbeitsfahrzeuge festgelegt ist, die Anfrage für jede der Fahrstrecken gemeldet wird, wenn die erste Fahrstrecke in der Fahrstrecke beinhaltet ist.

8. Automatisches Fahrverfahren nach einem der Ansprüche 1 bis 7, wobei
die Anfrage zu jedem von einem Zeitpunkt, wenn die Fahrstrecke erzeugt wird und einem Zeitpunkt, wenn das automatische Fahren gestartet wird, gemeldet wird.

9. Automatisches Fahrsystem, umfassend::
eine Streckenerfassungsverarbeitungseinheit, die eine Fahrstrecke für ein Arbeitsfahrzeug erfasst; und
eine Meldungsverarbeitungseinheit, die eine Anfrage meldet, ob automatisches Fahren des Arbeitsfahrzeugs gestartet werden soll oder nicht, in einem Fall, wo die von der Streckenerfassungsverarbeitungseinheit erfasste Fahrstrecke eine erste Fahrstrecke beinhaltet, die in eine Richtung führt, die sich von einer Richtung eines Erkennungsbereichs einer Erkennungseinheit, die in dem Arbeitsfahrzeug eingebaut ist und ein Hindernis um das Arbeitsfahrzeug herum erkennt, unterscheidet.

10. Automatisches Fahrprogramm zum Veranlassen, dass ein oder mehrere Prozessoren Folgendes ausführen:
eine Erfassung einer Fahrstrecke für ein Arbeitsfahrzeug; und
Melden einer Anfrage, ob automatisches Fahren des Arbeitsfahrzeugs gestartet werden soll oder nicht, in einem Fall, wo die Fahrstrecke eine erste Fahrstrecke beinhaltet, die in eine Richtung führt, die sich von einer Richtung eines Erkennungsbereichs einer Erkennungseinheit, die in dem Arbeitsfahrzeug eingebaut ist und ein Hindernis um das Arbeitsfahrzeug herum erkennt, unterscheidet.

## Revendications

1. Procédé de déplacement automatique comprenant :
l'exécution de :
l'acquisition d'un itinéraire de déplacement pour un véhicule de travail ; et
la transmission d'une interrogation consistant à déterminer s'il convient ou non de démarrer le déplacement automatique du véhicule de travail dans le cas où l'itinéraire de déplacement inclut un premier itinéraire de déplacement qui va dans une direction différente de celle d'une zone de détection d'une unité de détection qui est installée dans le véhicule de travail et qui détecte un obstacle autour du véhicule de travail.

2. Procédé de déplacement automatique selon la revendication 1, dans lequel
un écran de sélection, qui permet de sélectionner une instruction de démarrage de travail pour démarrer le déplacement automatique de l'itinéraire de déplacement, ou une instruction de changement d'itinéraire pour modifier l'itinéraire de déplacement, est affiché.

3. Procédé de déplacement automatique selon la revendication 2, dans lequel
des informations d'avertissement pour attirer l'attention dans un cas où le déplacement automatique de l'itinéraire de déplacement est démarré sont en outre affichées sur l'écran de sélection.

4. Procédé de déplacement automatique selon la revendication 2 ou 3, dans lequel
dans un cas où l'instruction de changement d'itinéraire est sélectionnée, un itinéraire de déplacement qui n'inclut pas le premier itinéraire de déplacement est présenté.

5. Procédé de déplacement automatique selon l'une quelconque des revendications 2 à 4, dans lequel
dans un cas où une unité de surveillance capable de surveiller une zone prédéterminée dans une direction du premier itinéraire de déplacement est installée dans le véhicule de travail, l'instruction de démarrage du travail est sélectionnable.

6. Procédé de déplacement automatique selon la revendication 5, dans lequel
l'unité de surveillance est une unité d'imagerie qui image la zone prédéterminée, et
une image capturée par l'unité d'imagerie est mise en évidence et affichée.

7. Procédé de déplacement automatique selon l'une quelconque des revendications 1 à 6, dans lequel
dans un cas où l'itinéraire de déplacement est défini pour correspondre à chacun d'une pluralité de véhicules de travail, l'interrogation est transmise pour chacun des itinéraires de déplacement si le premier itinéraire de déplacement est inclus pour cet itinéraire de déplacement.

8. Procédé de déplacement automatique selon l'une quelconque des revendications 1 à 7, dans lequel
l'interrogation est transmise à chacun d'un moment où l'itinéraire est généré et d'un moment où le déplacement automatique est démarré.

9. Système de déplacement automatique comprenant :
une unité de traitement d'acquisition d'itinéraire qui acquiert un itinéraire de déplacement pour un véhicule de travail ; et
une unité de traitement de transmission qui transmet une interrogation consistant à déterminer s'il convient ou non de démarrer le déplacement automatique du véhicule de travail dans le cas où l'itinéraire de déplacement acquis par l'unité de traitement d'acquisition d'itinéraire inclut un premier itinéraire de déplacement qui va dans une direction différente de celle d'une zone de détection d'une unité de détection qui est installée dans le véhicule de travail et qui détecte un obstacle autour du véhicule de travail.

10. Programme de déplacement automatique pour amener un ou plusieurs processeurs à exécuter :
l'acquisition d'un itinéraire de déplacement pour un véhicule de travail ; et
la transmission d'une interrogation consistant à déterminer s'il convient ou non de démarrer le déplacement automatique du véhicule de travail dans le cas où l'itinéraire de déplacement inclut un premier itinéraire de déplacement qui va dans une direction différente de celle d'une zone de détection d'une unité de détection qui est installée dans le véhicule de travail et qui détecte un obstacle autour du véhicule de travail.
